# EUROPÄISCHE PATENTSCHRIFT

(11) **EP 2 894 131 B1**
(45) Veröffentlichungstag und Bekanntmachung des Hinweises auf die Patenterteilung: **24.02.2016**
(21) Anmeldenummer: 14186321.7
(22) Anmeldetag: 25.09.2014
(51) Int. Cl.: C03B 3/00, F27B 3/18

(54) **Einlegevorrichtung mit geschlossenem Förderelement**
Insertion device with closed conveying element
Dispositif d'insertion doté d'un élément de transport fermé

(30) Priorität: 13.01.2014 DE 202014100125 U
(43) Veröffentlichungstag der Anmeldung: 15.07.2015
(73) Patentinhaber: ZIPPE GmbH & Co. KG, 97877 Wertheim (DE)
(72) Erfinder: Romstöck, Manfred, 97896 Freudenberg (DE); Zippe, Philipp, Dr., 97877 Wertheim (DE)
(74) Vertreter: advotec.

(56) Entgegenhaltungen:
- EP-A1- 0 579 009
- US-A- 2 556 467
- US-A- 4 545 717
- US-A- 4 854 959
- US-A- 5 134 627

## Beschreibung

Die Erfindung betrifft eine Einlegevorrichtung zum Zuführen von Schmelzgut aus Glasscherben und/oder Glasgemenge in einen Schmelzofen mit einer Vibrationsfördereinrichtung sowie einer Einschiebevorrichtung gemäß dem Oberbegriff des Anspruchs 1.

Gattungsgemäße Einlegevorrichtungen sind aus dem Stand der Technik in verschiedenen Ausführungsformen bekannt, wobei diese regelmäßig eine Vibrationsfördereinrichtung zur Zuführung des aufzuschmelzenden Schmelzguts aufweisen. Zum weitgehenden Verschluss der am Schmelzofen auf der Seite der Einlegevorrichtung vorhandenen Öffnung weist die Einlegevorrichtung einen am Gestell angeordneten Hitzeschild auf. Dieses hat einerseits die Aufgabe der Wärmeisolierung des Schmelzofens, insbesondere der Verhinderung einer unzulässigen Aufheizung in der Einlegevorrichtung. Andererseits gilt es, eine Luftströmung in den Schmelzofen hinein oder heraus nach Möglichkeit zu verhindern. Erstere führt zu einer Abkühlung der Schmelze und Verunreinigung durch eingebrachten Staub und zweite führt zu einer Aufheizung der Umgebung, insbesondere der Einlegevorrichtung und zu einer Verunreinigung der Einlegevorrichtung durch einen Staubaustrag aus dem Schmelzofen.

Bei bekannten Einlegevorrichtungen stellt sich das grundlegende Problem der zwingend notwendigen Durchführung der Vibrationsfördereinrichtung und der Einschiebevorrichtung durch den Hitzeschild.

Wesentlich für die vorliegende Betrachtung ist das Ziel einer möglichst staubdichten Ausführung bei Positionierung der Einlegevorrichtung am Schmelzofen. Hierbei weisen die bekannten Ausführungsformen den Nachteil auf, dass die Vibrationsfördereinrichtung in aller Regel von einer oberseitig offenen Förderrinne gebildet wird. Dies führt zu einer nachteiligen Öffnung zwischen Schmelzofen und Einlegevorrichtung aufgrund des im Hitzeschild für die Förderrinne vorhandenen Durchbruchs. Somit kann einerseits die im Schmelzofen geforderte Wärmeenergie entlang der Förderrinne in die Einlegevorrichtung zurückströmen sowie es ebenso je nach Druckverhältnissen zu einem Eintrag von Staub und Kaltluft durch die Förderrinne in den Schmelzofen kommen kann.

Zur Bekämpfung dieser Problematik wird mitunter innerhalb der Einlegevorrichtung in ein Gehäuse um die Vibrationsfördereinrichtung angeordnet. Dies führt jedoch zu einem einerseits großen Aufwand zur staubdichten Abkapselung der Vibrationsfördereinrichtung, und zum anderen wird die Zugänglichkeit zur Vibrationsfördereinrichtung für Wartungszwecke oder dergleichen erheblich erschwert.

Die EP 0 579 009 A1 beschreibt eine Einlegevorrichtung, deren Vibrationsförderrinne einen trogförmigen Querschnitt aufweist. Aufgrund des offenen Querschnitts der Vibrationsförderrinne wird dem Staub kein hoher Widerstand entgegengesetzt.

Aufgabe der vorliegenden Erfindung ist es daher, eine verbesserte Staubabdichtung zwischen Schmelzofen und Einlegevorrichtung im Bereich der Vibrationsfördereinrichtung zu erzielen.

Die gestellte Aufgabe wird durch eine erfindungsgemäße Ausführungsform nach der Lehre des Anspruchs 1 gelöst.

Vorteilhafte Ausführungsformen sind Gegenstand der Unteransprüche.

Die gattungsgemäße Einlegevorrichtung dient zunächst einmal zum Zuführen von Schmelzgut aus Glasscherben und/oder Glasgemenge in einen Schmelzofen. Hierbei umfasst die Einlegevorrichtung ein Gestell und einen auf der zum Schmelzofen weisenden Seite am Gestell angebrachten Hitzeschild. Unerheblich ist hierbei zunächst, ob der Hitzeschild gerade bzw. eben oder konkav gewölbt ausgeführt ist. Mittels einer im Gestell fest eingebauten Materialaufnahmeeinrichtung kann das Schmelzgut von einer externen Zuführung übernommen werden. Weiterhin befindet sich im Gestell eine Vibrationsfördereinrichtung, wobei hierzu ein beweglich am Gestell gelagertes Vibrationsförderelement gehört. Bei Betrieb der Vibrationsfördereinrichtung erfolgt eine Übergabe des Schmelzguts von der Materialaufnahmeeinrichtung in das Vibrationsförderelement, welches das Schmelzgut durch dessen Vibration bei Betrieb der Einlegevorrichtung in den Schmelzofen fördern kann. Bezüglich der beweglichen Lagerung des Vibrationsförderelements sind die in aller Regel geringen Amplituden zu berücksichtigen, welche durch die üblicherweise bei Vibrationsfördereinrichtungen eingesetzten Bewegungsformen auftreten. Weiterhin umfasst die Einlegevorrichtung eine Einschiebevorrichtung, welche ebenso den Hitzeschild durchdringt und mittels derer das im Schmelzofen aufgebrachte Schmelzgut in Richtung Mitte des Schmelzofens vorgeschoben werden kann.

Erfindungsgemäß wird die Reduzierung des Wärmeverlusts aus dem Schmelzofen erreicht sowie die Einströmung von Kaltluft und Staub in den Schmelzofen verhindert, indem das Vibrationsförderelement rohrartig ausgeführt wird. Hierbei weist das Vibrationsförderelement eine allseits umschlossene Hülle auf, wobei für den zweckbestimmten Transport des Schmelzguts durch das Vibrationsförderelement dieses am zum Schmelzofen weisenden Ende eine Ausgabeöffnung sowie unterhalb der Materialaufnahmeeinrichtung eine Aufnahmeöffnung aufweist.

Durch diese neugeschaffene Ausführungsform wird verhindert, dass eine unzulässig große Öffnung entlang der Oberseite der Förderrinne entsteht, durch die ein ungehinderter Luftaustausch und Staubdurchtritt vom Schmelzofen in die Einlegevorrichtung bzw. umgekehrt stattfinden kann. Durch die im Wesentlichen geschlossene Form des Vibrationsförderelements kann somit nunmehr lediglich ein Luftstrom durch die Ausgabeöffnung entlang des Vibrationsförderelements zur Aufnahmeöffnung erfolgen. Insofern wird das Vibrationsförderelement zumindest im Bereich innerhalb der Einlegevorrichtung in der Art eines Vibrationsförderrohrs mit geschlossenem Ende (demjenigen innerhalb der Vibrationsfördereinrichtung), mit einer Aufnahmeöffnung gebildet. Ebenso erübrigt sich somit eine Einkapselung mittels eines Gehäuses innerhalb der Einlegevorrichtung.

Unabhängig davon, ob ein Schließelement die Materialaufnahmeeinrichtung luft- und/oder staubdicht verschließen kann, ist zu berücksichtigen, dass bei Betrieb der Einlegevorrichtung mit entsprechender Beschickung mit Schmelzgut die Materialaufnahmeeinrichtung in aller Regel befüllt ist, so dass das Schmelzgut selbst bereits einen unzulässigen Luftstrom maßgeblich reduziert bzw. verhindert.

Eine vorteilhafte Leistungssteigerung der Einlegevorrichtung wird erzielt, wenn zumindest zwei Vibrationsförderelemente nebeneinander angeordnet werden, so dass eine verbesserte Einbringung des Schmelzguts in den Schmelzofen erzielt werden kann.

Bei einer besonders vorteilhaften Ausführungsform mit zwei unabhängig voneinander steuerbaren Vibrationsfördereinrichtungen wird zudem die Möglichkeit eröffnet, den Schmelzgutstrom im Schmelzofen in gewissem Umfang durch die jeweilige Leistungsanpassung der beiden Vibrationsfördereinrichtungen zu beeinflussen. Somit kann bereits eine Lenkung des Schmelzgutstroms im Schmelzbad und somit die optimale Aufschmelzung, insbesondere bei ungleichmäßiger Wärmeverteilung, erzielt werden.

Einen unzulässigen Wärmestau im Vibrationsförderelement, insbesondere aufgrund der geschlossenen Form, mit einerseits einer potentiellen Schädigung des Vibrationsförderelements und andererseits einem unzulässigen Aufschmelzen des einzubringenden Schmelzguts noch vor Erreichen des Schmelzofens wird vorteilhaft dadurch begegnet, dass das Vibrationsförderelement zumindest abschnittsweise in der unteren Hälfte doppelwandig ausgeführt ist. Das heißt, dass zumindest der aus dem Hitzeschild herausragende Teil des Vibrationsförderelements entsprechend doppelwandig ausgeführt ist, wobei im Zwischenraum zumindest ein Kühlmittelkanal verläuft. Somit kann im Bereich innerhalb der Einlegevorrichtung eine Kühlmittelzuführung vorgesehen sein, über die das Vibrationsförderelement mit einem entsprechenden Kühlmittelstrom versorgt werden kann.

Eine vorteilhafte Durchführung des Vibrationsförderelements durch den Hitzeschild sowie günstige Transportverhältnisse werden dadurch realisiert, indem das Vibrationsförderelement im Querschnitt in der unteren Hälfte wannenförmig und/oder u-förmig und in der oberen Hälfte eckig ausgeführt ist. Durch die auf der Unterseite liegende wannenförmige bzw. u-förmige Ausführungsform wird besonders eine Abdichtung des Vibrationsförderelements im Hitzeschild bei guten Förderleistungen begünstigt, während hingegen die eckige Ausführungsform auf der Oberseite verhindert, dass der Materialstrom negativ beeinflusst wird. Ebenso zeigt sich diese wannenförmige bzw. u-förmige Ausführungsform des Vibrationsförderelements auf der Unterseite vorteilhaft hinsichtlich der vom Schmelzbad ausgehenden Wärmebelastung. Unschädlich sind hierbei kleine Abrundungen anstelle der exakt eckigen Ausführung.

Sofern sich die Abdichtung des Vibrationsförderelements im Hitzeschild auf der Oberseite nachteilig gestaltet und/oder sich unzulässige Ablagerung auf der Oberseite ansammeln, so ist es vorteilhaft möglich, eine Art gebogene, u-förmige Haube auf das Vibrationsförderelement aufzusetzen, wobei im Inneren der freie Querschnitt auf der Oberseite unverändert eckig ist.

Das Ziel einer möglichst geringen Staubbelastung sowie eines möglichst geringen Luftwechsels zwischen Einlegevorrichtung und Schmelzofen wird vorteilhaft erreicht, indem das Vibrationsförderelement elastisch und staubdicht mit der Materialaufnahmeeinrichtung verbunden ist. Durch die staubdichte Verbindung zwischen Vibrationsförderelement und Materialaufnahmeeinrichtung kann nahezu kein Luftstrom in einem ansonsten verbleibenden Spalt zwischen der Materialaufnahmeeinrichtung und dem Vibrationsförderelement bei der Aufnahmeöffnung auftreten. In Folge dessen kann die Durchströmung entlang des Vibrationsförderelements effektiv durch eine in der Materialaufnahmeeinrichtung eingebrachten Menge an Schmelzgut verhindert werden.

Zur Realisierung einer staubdichten Verbindung ist es vorteilhaft die Verbindung zwischen dem Vibrationsförderelement und der Materialaufnahmeeinrichtung in Art einer Manschette auszuführen, welche beispielsweise mittels Spannbänder fixiert wird. Das Material der Manschette muss hierbei aus einem Material bestehen, welches zum einen zumindest hinsichtlich der funktional eingesetzten Vibration des Vibrationsförderelements elastisch und zum anderen entsprechend den thermischen Belastungen im Anfangsbereich des Vibrationsförderelements beständig ist. Hierzu eignet sich besonders vorteilhaft die Verwendung eines elastischen und temperaturbeständigen Glasfaserverbundmaterials.

Ebenso ist es zur Reduzierung bzw. Verhinderung einer Luftströmung vom Schmelzofen in die Einlegevorrichtung vorteilhaft, wenn das Vibrationsförderelement ebenso elastisch und staubdicht mit dem Hitzeschild verbunden ist. Somit kann auch bei dem für das Vibrationsförderelement erforderlichen Durchbruch im Hitzeschild ein Luftstrom durch einen aufgrund der Vibrationsbewegung notwendigen Freiraum verhindert werden.

Analog der vorteilhaften Verbindung von Vibrationsförderelement mit der Materialaufnahmeeinrichtung ist es zur Realisierung einer staubdichten Verbindung vorteilhaft, wenn die Verbindung zwischen dem Vibrationsförderelement und dem Hitzeschild in Art einer Manschette ausgeführt wird, welche beispielsweise mittels Spannbänder fixiert wird. Das Material der Manschette muss hierbei gleichfalls aus einem Material bestehen, welches zum einen zumindest hinsichtlich der funktional eingesetzten Vibration des Vibrationsförderelements elastisch und zum anderen entsprechend den thermischen Belastungen beständig ist. Zu berücksichtigen ist hierbei, dass in der Regel die thermischen Belastungen auf eine entsprechende Manschette unmittelbar hinter einem zur Ermöglichung der Vibration des Vibrationsförderelements zwischen diesem und dem Hitzeschild erforderlichen Spalt höher sind als im oben beschriebenen Fall der Manschette zwischen Vibrationsförderelement und Materialaufnahmeeinrichtung. Hierzu eignet sich wiederum besonders vorteilhaft die Verwendung eines elastischen und temperaturbeständigen Glasfaserverbundmaterials.

Zur vorteilhaften Realisierung einer möglichst geringen Luftströmung zwischen Schmelzofen und Einlegevorrichtung bzw. zur Verhinderung einer Staubbelastung ist es weiterhin vorteilhaft, wenn die Einschiebevorrichtung einen langgestreckten Pusherträger und einen am vorderen zum Schmelzofen weisenden Ende exzentrisch angeordneten Pusher umfasst, wobei der Pusherträger nebst Pusher in Richtung der Längsachse des Pusherträgers verschiebbar und um die Längsachse schwenkbar ist. Somit wird eine Bewegungsform bei der Einschiebevorrichtung realisiert, welche lediglich einen Durchbruch im Hitzeschild unwesentlich größer als den Querschnitt des Pusherträgers erfordert, ohne dass ein Anheben oder Absenken des Pushers - wie ansonsten üblich - zu berücksichtigen wäre.

Hierbei ist es besonders vorteilhaft, wenn der Pusherträger den Hitzeschild in einer Abdichtungshülse längsverschiebbar und schwenkbar durchdringt. Somit wird eine optimale Abdichtung zwischen Schmelzofen und Einlegevorrichtung erzielt.

Sowohl zur Steigerung der Leistung der Einlegevorrichtung als auch zur Beeinflussung der Stromrichtung des aufgebrachten Schmelzguts im Schmelzofen ist es vorteilhaft, wenn zwei den Hitzeschild durchdringende symmetrisch über die Mitte der Einlegevorrichtung angeordnete Einschiebevorrichtungen eingesetzt werden.

In den nachfolgenden Figuren wird eine beispielhafte Ausführungsform für eine erfindungsgemäße Einlegevorrichtung skizziert.

Es zeigen:
- Fig. 1: eine perspektivische Ansicht auf eine beispielhafte Einlegevorrichtung;
- Fig. 2: eine Prinzipskizze im Längsschnitt durch die Einlegevorrichtung.

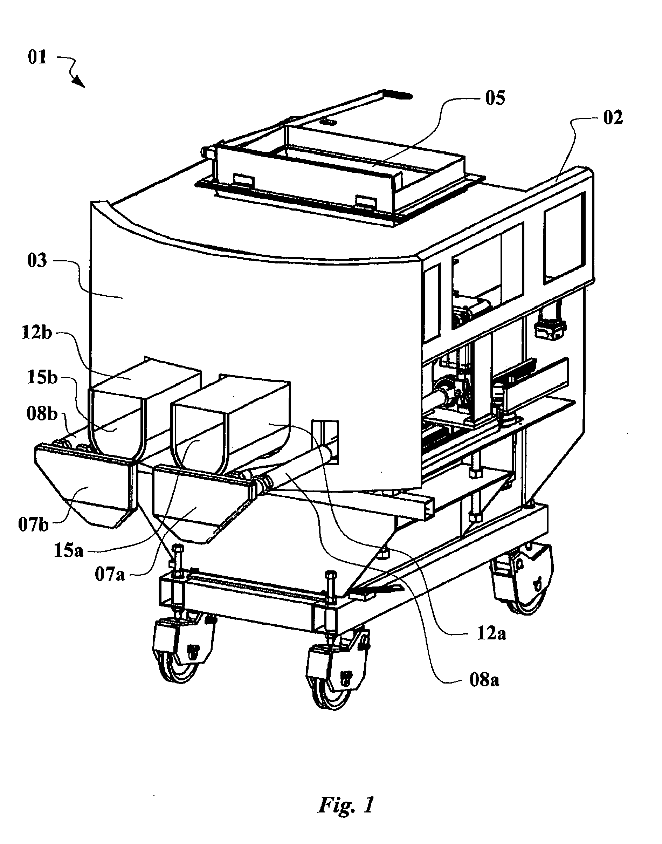

In der **Figur 1** wird die beispielhafte Einlegevorrichtung 01 skizziert. Zu erkennen ist zunächst einmal das auf Rädern gelagerte Gestell 02, an dem 02 auf der zum Schmelzofen weisenden Seite der Hitzeschild 03 angeordnet ist. Dieses 03 wird durchdrungen von den beiden Vibrationsförderelementen 12a und 12b der beiden unabhängig voneinander steuerbaren Vibrationsfördereinrichtungen. Ebenso in doppelter Ausführung ist die Einschiebevorrichtung vorhanden, dessen langgestreckte Pusherträger 08a bzw. 08b den Hitzschild 03 durchdringen und an denen am vorderen zum Schmelzofen weisenden Ende jeweils der Pusher 07a bzw. 07b angeordnet ist. Die Materialzuführung des Schmelzguts in die Einlegevorrichtung erfolgt über die mittig an der Oberseite angeordnete Materialaufnahmeeinrichtung 05.

Weiterhin zu erkennen ist der Aufbau des Vibrationsförderelements 12 mit seiner auf der Unterseite u-förmigen Gestalt und oberseitig eckigen Ausführungsform. Ebenso zu erkennen ist die doppelwandige Ausführung des Vibrationsförderelements 12, wobei zwischenliegend Kühlmittelkanäle angeordnet sind. An dem dargestellten zum Schmelzofen weisenden Ende des Vibrationsförderelements 12 befindet sich die Ausgabeöffnung 15a bzw. 15b, über die das Schmelzgut in den Schmelzofen eingebracht wird.

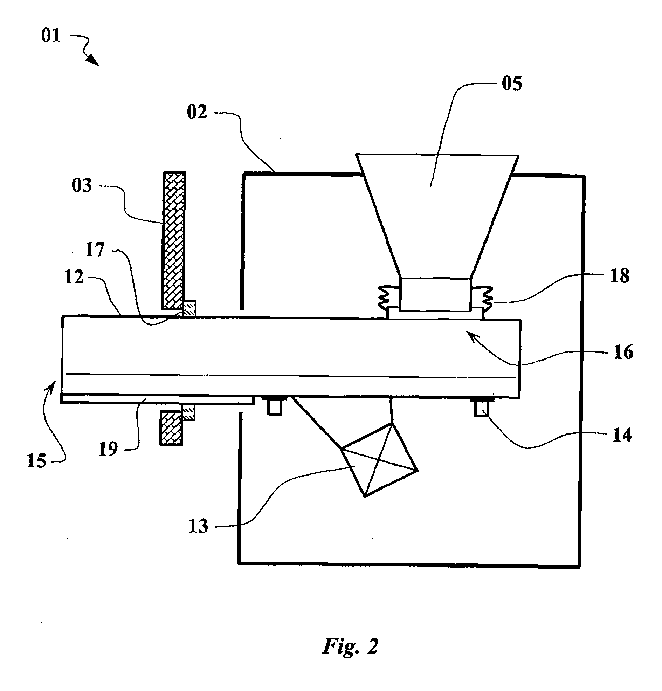

Die **Figur 2** zeigt schematisch die Ausführungsform der Einlegevorrichtung 01 im Längsschnitt, wobei wiederum das Gestell 02 mit dem davorliegenden Hitzeschild 03 skizziert ist. Am Gestell 02 fest angeordnet befindet sich die Materialaufnahmeeinrichtung 05 zur Aufnahme des zuzuführenden Schmelzguts. Die Vibrationsfördereinrichtung umfasst das Vibrationsförderelement 12 mit einer geschlossenen Außenhülle, wobei lediglich die notwendige Ausgabeöffnung 15 sowie eine Aufnahmeöffnung 16 unterhalb der Materialaufnahmeeinrichtung 05 vorhanden sind. Somit wird der Materialfluss an Schmelzgut von der Materialaufnahmeeinrichtung 05 durch das Vibrationsförderelement 12 ermöglicht. Das Vibrationsförderelement 12 der Vibrationsfördereinrichtung wird von einem unterseitig angeordneten Vibrationsantrieb 13 angetrieben, wobei das Vibrationsförderelement 12 beweglich auf den Förderelementlagerungen 14 im Gestell 02 gelagert ist.

Zur optimalen Abdichtung bzw. Verhinderung eines Luftstroms von der Einlegevorrichtung in den Schmelzofen bzw. umgekehrt ist weiterhin das Vibrationsförderelement 12 über eine Staubdichtung 18 mit der Materialaufnahmeeinrichtung 05 verbunden. Somit wird ein Luftstrom in die Einlegevorrichtung 01 im Bereich der Materialaufnahmeeinrichtung 05 in einfacher und vorteilhafter Weise verhindert. Ebenso befindet sich zwischen dem Vibrationsförderelement 12 und dem Hitzeschild 03 eine Staubdichtung 17, welche ebenso einen Luftstrom im Wesentlichen verhindert.

## Patentansprüche

1. Einlegevorrichtung (01) zum Zuführen von Schmelzgut aus Glasscherben und/oder Glasgemenge in einen Schmelzofen, umfassend ein Gestell (02) und ein Hitzeschild (03) und eine am Gestell (02) fest angeordnete Materialaufnahmeeinrichtung (05) und eine Vibrationsfördereinrichtung mit einem beweglich am Gestell (02) gelagerten Vibrationsförderelement (12), welches (12) den Hitzeschild (03) durchdringt und mittels der das Schmelzgut von der Materialaufnahmeeinrichtung (05) in den Schmelzofen gefördert werden kann, und mit einer Einschiebevorrichtung, welche den Hitzeschild (03) durchdringt und mittels der das Schmelzgut im Schmelzofen vorgeschoben werden kann,
**dadurch gekennzeichnet,**
**dass** das Vibrationsförderelement (12) rohrartig ausgeführt ist und abgesehen von einer Ausgabeöffnung (15) an dem zum Schmelzofen weisenden Ende und einer Aufnahmeöffnung (16) unterhalb der Materialaufnahmeeinrichtung (05) eine geschlossene Hülle aufweist.

2. Einlegevorrichtung (01) nach Anspruch 1,
**dadurch gekennzeichnet,**
**dass** zwei den Hitzeschild (03) durchdringende Vibrationsförderelemente (12a, 12b) nebeneinander angeordnet sind, wobei insbesondere zwei unabhängig voneinander steuerbare Vibrationsfördereinrichtungen vorhanden sind.

3. Einlegevorrichtung (01) nach Anspruch 1 oder 2,
**dadurch gekennzeichnet,**
**dass** das Vibrationsförderelement (12) im Querschnitt in der unteren Hälfte wannenförmig und/oder u-förmig und in der oberen Hälfte eckig ausgeführt ist.

4. Einlegevorrichtung (01) nach einem der Ansprüche 1 bis 3,
**dadurch gekennzeichnet,**
**dass** das Vibrationsförderelement (12) zumindest abschnittsweise in der unteren Hälfte doppelwandig ausgeführt ist, wobei im Zwischenraum zumindest ein Kühlmittelkanal (19) verläuft.

5. Einlegevorrichtung (01) nach einem der Ansprüche 1 bis 4,
**dadurch gekennzeichnet,**
**dass** das Vibrationsförderelement (12) elastisch und staubdicht mit der Materialaufnahmeeinrichtung (05) verbunden ist.

6. Einlegevorrichtung (01) nach einem der Ansprüche 1 bis 5,
**dadurch gekennzeichnet,**
**dass** das Vibrationsförderelement (12) elastisch und staubdicht mit dem Hitzeschild (03) verbunden ist.

7. Einlegevorrichtung (01) nach einem der Ansprüche 1 bis 6,
**dadurch gekennzeichnet,**
**dass** die Einschiebevorrichtung einen langgestreckten Pusherträger (08) und einen am vorderen zum Schmelzofen weisenden Ende exzentrisch angeordneten Pusher (07) umfasst, wobei der Pusherträger (08) nebst Pusher (07) in Richtung einer Längsachse des Pusherträgers (08) verschiebbar und um die Längsachse schwenkbar ist.

8. Einlegevorrichtung (01) nach Anspruch 7,
**dadurch gekennzeichnet,**
**dass** der Pusherträger (08) den Hitzeschild (03) in einer Abdichtungshülse längsverschiebbar und schwenkbar durchdringt.

9. Einlegevorrichtung (01) nach einem der Ansprüche 1 bis 8,
**dadurch gekennzeichnet,**
**dass** zwei den Hitzeschild (03) durchdringende symmetrisch über die Mitte der Einlegevorrichtung (01) angeordnete Einschiebevorrichtungen angeordnet sind.

## Claims

1. An insertion device (01) for supplying material to be melted composed of broken glass and/or glass batch to a melting furnace, comprising a frame (02) and a heat shield (03) and a material receiving device (05) that is firmly arranged on the frame (02) and a vibration conveying device comprising a vibration conveying element (12) that is movably mounted on the frame (02) and penetrates the heat shield (03) and by means of which the material to be melted can be conveyed from the material receiving device (05) into the melting furnace, and comprising an advancing device that penetrates the heat shield (03) and by means of which the material to be melted can be advanced in the melting furnace,
**characterised in that**
the vibration conveying element (12) is tube-shaped and has a closed shell with the exception of a discharge opening (15) at the end facing toward the melting furnace and a receiving opening (16) below the material receiving device (05).

2. The insertion device (01) according to claim 1,
**characterised in that**
two vibration conveying elements (12a, 12b) that penetrate the heat shield (03) are arranged side by side, in particular two vibration conveying devices being provided that can be controlled independently from each other.

3. The insertion device (01) according to claim 1 or 2,
**characterised in that**
the vibration conveying element (12) has a tub-shaped and/or u-shaped cross-section in the lower half and an angular cross-section in the upper half.

4. The insertion device (01) according to any one of claims 1 to 3,
**characterised in that**
the vibration conveying element (12) has a double wall at least in sections in the lower half, at least one coolant duct (19) running in the intermediate space.

5. The insertion device (01) according to any one of claims 1 to 4,
**characterised in that**
the vibration conveying element (12) is connected to the material receiving device (05) in an elastic and dust-proof manner.

6. The insertion device (01) according to any one of claims 1 to 5,
**characterised in that**
the vibration conveying element (12) is connected to the heat shield (03) in an elastic and dust-proof manner.

7. The insertion device (01) according o any one of claims 1 to 6,
**characterised in that**
the advancing device comprises an elongated pusher holder (08) and a pusher (07) that is arranged eccentrically at the front end facing toward the melting furnace, the pusher holder (08) being movable along with the pusher (07) in the direction of a longitudinal axis of the pusher holder (08) and being pivotable about the longitudinal axis.

8. The insertion device (01) according to claim 7,
**characterised in that**
the pusher holder (08) penetrates the heat shield (03) in a sealing sleeve in such a manner that the pusher holder (08) can be moved longitudinally and can be pivoted.

9. The insertion device (01) according to any one of claims 1 to 8,
**characterised in that**
two advancing devices are provided that penetrate (03) the heat shield (03) and that are arranged symmetrically with respect to the centre of the insertion device (01).

## Revendications

1. Dispositif d'insertion (01) destiné au chargement de matière pour la fonte composée de débris de verre et/ou de mélange vitrifiable dans un four à fusion, le dispositif d'insertion (01) comprenant un cadre (02) et un écran thermique (03) et un dispositif de réception de matière (05) disposé de manière solidaire sur le cadre (02) et un dispositif de transport à vibrations comportant un élément de transport à vibrations (12) qui est monté de manière mobile sur le cadre (02) et pénètre l'écran thermique (03) et par lequel la matière pour la fonte peut être transportée à partir du dispositif de réception de matière (05) dans le four à fusion, et comprenant un dispositif d'avancement qui pénètre l'écran thermique (03) et par lequel la matière pour la fonte peut être avancée dans le four à fusion,
**caractérisé en ce que**
l'élément de transport à vibrations (12) est réalisé sous forme de tube et a une gaine fermée sauf un orifice de sortie (15) à l'extrémité orientée vers le four à fusion et un orifice de réception (16) au-dessous du dispositif de réception de matière (05).

2. Dispositif d'insertion (01) selon la revendication 1,
**caractérisé en ce que**
deux éléments de transport à vibrations (12a, 12b) pénétrant l'écran thermique (03) sont disposés côté à côté, en particulier deux dispositifs de transport à vibrations étant prévus qui peuvent être commandés indépendamment l'un de l'autre.

3. Dispositif d'insertion (01) selon la revendication 1 ou 2,
**caractérisé en ce que**
l'élément de transport à vibrations (12) a une section en forme de baignoire ou en forme de u dans la moitié inférieure et une section angulaire dans la moitié supérieure.

4. Dispositif d'insertion (01) selon l'une quelconque des revendications 1 à 3,
**caractérisé en ce que**
l'élément de transport à vibrations (12) a une paroi double au moins par sections dans la moitié inférieure, au moins un conduit de fluide de refroidissement (19) s'étendant dans l'espace intermédiaire.

5. Dispositif d'insertion (01) selon l'une quelconque des revendications 1 à 4,
**caractérisé en ce que**
l'élément de transport à vibrations (12) est connecté au dispositif de réception de matière (05) de manière élastique et étanche à la poussière.

6. Dispositif d'insertion (01) selon l'une quelconque des revendications 1 à 5,
**caractérisé en ce que**
l'élément de transport à vibrations (12) est connecté à l'écran thermique (03) de manière élastique et étanche à la poussière.

7. Dispositif d'insertion (01) selon l'une quelconque des revendications 1 à 6,
**caractérisé en ce que**
le dispositif d'avancement comprend un porteur de pousseur (08) allongé et un pousseur (07) disposé excentriquement sur l'extrémité antérieure orientée vers le four à fusion, le porteur de pousseur (08) pouvant être déplacé avec le pousseur (07) dans la direction d'un axe longitudinal du porteur de pousseur (08) et pouvant être pivoté autour de l'axe longitudinal.

8. Dispositif d'insertion (01) selon la revendication 7,
**caractérisé en ce que**
le porteur de pousseur (08) pénètre l'écran thermique (03) dans une douille d'étanchement de telle manière qu'il peut être déplacé longitudinalement et qu'il peut être pivoté.

9. Dispositif d'insertion (01) selon l'une quelconque des revendications 1 à 8,
**caractérisé en ce que**
deux dispositifs d'avancement sont prévus qui pénètrent l'écran thermique (03) et qui sont disposés de manière symétrique par rapport au centre du dispositif d'insertion (01).
